# EUROPEAN PATENT APPLICATION

(11) **EP 2 736 239 A1**
(43) Date of publication of application: **28.05.2014**
(21) Application number: 12815132.1
(22) Date of filing: 20.07.2012
(51) Int. Cl.: H04M 3/42, H04W 4/22, H04W 8/20, H04W 16/16

(54) **COMMUNICATION SYSTEM**

(30) Priority: 21.07.2011 JP 2011160042
(71) Applicant: NEC Corporation, Tokyo 108-8001 (JP)
(72) Inventor: SONETAKA, Noriyoshi, Tokyo 108-8001 (JP)
(74) Representative: Vossius & Partner
(86) International application number: PCT/JP2012/068432
(87) International publication number: WO 2013/012059

(57) **Abstract**

A mobile terminal (100), when receiving a signal requesting mobile terminal ID information that was transmitted from a femtobase station (200) deployed at a position of a predetermined height, transmits the mobile terminal ID information to the femtobase station (200). The femtobase station (200) transmits the mobile terminal ID information transmitted from mobile terminal (100) to a public aid communication device (300). The public aid communication device (300) displays the mobile terminal ID information transmitted from femtobase station (200).

## Description

### Technical Field

The present invention relates to a communication system, communication device and communication method performing communication, in particular relating to a communication system, communication device and communication method performing communication using mobile terminals.

### Background Art

Recently, mobile terminals are a must item of everyday life, and many of citizens have or possess those.

For this reason, it was believed that if a disaster such as an earthquake occurs, it would be easy to confirm survival of inhabitants in the affected area by calling their mobile terminals own or sending emails to their mobile terminals.

However, in reality, once a disaster such as a large-scale earthquake occurred, such a situation occurred in which mobile terminals became hard to connect due to destruction and submersion of the facilities of communications such as base stations and others or due to restriction on phone calls. As a result, despite the fact that many of the dwellers fortunately had mobile terminals, there occurred many cases in which they could not be contacted through the their mobile terminals and it became difficult to confirm whether or not they were alive.

On the other hand, there has been a disclosed technology (see Patent Document 1, for example) in which a relay device for relaying radio waves between mobile terminals and a base station is attached to a balloon so that the relay device can rise and float in an area where use of a mobile terminal is difficult, whereby mobile terminals can obtain communication by way of the floating relay device.

### Related Art Documents

### Non-Patent Document

Patent Document 1: JP2007-184878A

### Summary of the Invention

### Problems to be solved by the Invention

It is possible to apply the above technology disclosed in Patent Document 1 to the aforementioned affected area. However, when external communication device itself which is a base station or the like and the communication network itself have become unworkable, it is impossible to establish communication with mobile terminals, hence the above technology entails the problem in which it is difficult to confirm the status of the disaster victim.

The object of the present invention is to provide a communication system, communication device and communication method that solve the above problem.

### Means for Solving the Problems

A communication system of the present invention is a communication system including a mobile terminal, a first communication device and a second communication device, and characterized in that
the mobile terminal, when receiving a signal transmitted from the first communication device for requesting mobile terminal ID information that has been allotted beforehand to the mobile terminal so that the mobile terminal can be identified, transmits the mobile terminal ID information to the first communication device,
the first communication device is deployed at a position of a predetermined height, the first communication device transmits a signal, requesting the mobile terminal ID information, to the radio communication coverage area and transmits the mobile terminal ID information transmitted from the mobile terminal to the second communication device, and
the second communication device displays the mobile terminal ID information transmitted from the first communication device.

A communication system including a mobile terminal, an antenna and a communication device, is characterized in that
the mobile terminal, when receiving a signal, transmitted from the communication device by way of the antenna, for requesting mobile terminal ID information that has been allotted beforehand to the mobile terminal so that the mobile terminal can be identified, transmits the mobile terminal ID information to the communication device by way of the antenna,
the antenna is deployed at a position of a predetermined height,
the communication device transmits a signal, requesting the mobile terminal ID information, to the radio communication coverage area of the antenna by way of the antenna and displays the mobile terminal ID information transmitted from the mobile terminal by way the antenna.

A communication device of the present invention is a communication device deployed at a position of a predetermined height, and comprises:
a mobile terminal interface portion that transmits a signal requesting mobile terminal ID information that has been allotted beforehand to a mobile terminal so that the mobile terminal can be identified, to the radio communication coverage area of the communication device, and
a device interface portion that, when the mobile terminal ID information is transmitted from the mobile terminal, transmits the mobile terminal ID information to a device connected to the communication device.

A communication device comprises:
an interface portion that, when mobile terminal ID information that has been allotted beforehand to a mobile terminal existing in the radio communication coverage area of a device connected thereto is transmitted from the device, receives the mobile terminal ID information; and,
a display portion that displays the mobile terminal ID information which the interface portion has received.

A communication device connected to an antenna, comprises:
an interface portion that transmits a signal, requesting mobile terminal ID information which has been allotted beforehand to a mobile terminal so that the mobile terminal can be identified, to the radio communication coverage area of the antenna and that, when the mobile terminal ID information is transmitted from the mobile terminal by way of the antenna, receives the mobile terminal ID information; and,
a display portion that displays the mobile terminal ID information which the interface portion has received.

A communication method of the present invention is a communication method in a communication system including a mobile terminal, a first communication device and a second communication device, and comprises:
a step for the first communication device deployed at a position of a predetermined height to transmit a signal, requesting mobile terminal ID information that has been allotted beforehand to the mobile terminal so that the mobile terminal can be identified, to the radio communication coverage area of the first communication device;
a step for the mobile terminal to transmit the mobile terminal ID information to the first communication device when the mobile terminal receives the signal requesting the mobile terminal ID information, transmitted from the first communication device;
a step for the first communication device to transmit the mobile terminal ID information transmitted from the mobile terminal to the second communication device; and,
a step for the second communication device to display the mobile terminal ID information transmitted from the first communication device.

A communication method in a communication system including a mobile terminal and a communication device, comprises:
a step for the communication device to transmit a signal, requesting mobile terminal ID information that has been allotted beforehand to the mobile terminal so that the mobile terminal can be identified, to the radio communication coverage area of an antenna connected to the communication device and deployed at a position of a predetermined height, by way of the antenna;
a step for the mobile terminal to transmit the mobile terminal ID information to the communication device by way of the antenna when the mobile terminal receives the signal requesting for the mobile terminal ID information, transmitted from the communication device by way of the antenna; and,
a step for the communication device to display the mobile terminal ID information transmitted from the mobile terminal by way of the antenna.

### Effect of the Invention

In the present invention, it is possible to easily confirm survival of disaster victims.

### Brief Description of the Drawings

FIG. 1 A diagram showing the first exemplary embodiment of a communication system of the present invention.
FIG. 2 A block diagram showing one example of the internal configuration of the femtobase station shown in FIG. 1.
FIG. 3 A diagram showing one example of the internal configuration of the public aid communication device shown in FIG. 1.
FIG. 4 A sequence diagram for illustrating a process by which the public aid communication device displays mobile terminal ID information, in the commutation method in the configuration shown in FIG. 1.
FIG. 5 A diagram showing one example of mobile terminal ID information displayed on the display portion shown in FIG. 3.
FIG. 6 A diagram showing one display example in the display portion shown in FIG. 3, on which a map showing positions of mobile terminals is displayed.
FIG. 7 A sequence diagram for illustrating a process carried out when a mobile terminal has made a call, in the commutation method in the configuration shown in FIG. 1.
FIG. 8 A diagram showing one display example in the display portion shown in FIG. 3, on which the mobile terminal ID information of a mobile terminal that has made a call is displayed in a distinguishable manner.
FIG. 9 A diagram showing one display example when a message transmitted from a mobile terminal is displayed on a display portion.
FIG. 10 A sequence diagram for illustrating a process carried out when a public aid communication device makes a call to a mobile terminal of mobile terminal ID information displayed on the display portion, in the commutation method in the configuration shown in FIG. 1.
FIG. 11 A diagram showing one example of the configuration shown in FIG. 1, in which a rescue terminal is provided.
Fig. 12 A sequence diagram for illustrating a communication method in the configuration shown in FIG. 11.
FIG. 13 A diagram showing the second exemplary embodiment of a communication system of the present invention.
FIG. 14 A diagram showing the third exemplary embodiment of a communication system of the present invention.
FIG. 15 A diagram showing one example of the internal configuration of the public aid communication device shown in FIG. 14.
FIG. 16 A sequence diagram for illustrating a process by which the public aid communication device displays mobile terminal ID information, in the commutation method in the configuration shown in FIG. 14.
FIG. 17 A sequence diagram for illustrating a process carried out when a mobile terminal has made a call, in the commutation method in the configuration shown in FIG. 14.
FIG. 18 A sequence diagram for illustrating a process carried out when a public aid communication device makes a call to the mobile terminal of mobile terminal ID information displayed on the display portion, in the commutation method in the configuration shown in FIG. 1.
FIG. 19 A diagram showing one example of the configuration shown in FIG. 14, in which a rescue terminal is provided.
FIG. 20 A sequence diagram for illustrating a communication method in the configuration shown in FIG. 19.
FIG. 21 A diagram showing the fourth exemplary embodiment of a communication system of the present invention.

### Configurations for Carrying Out the Invention

Next, the exemplary embodiments of the present invention will be described with reference to the drawings.

### (The First Exemplary Embodiment)

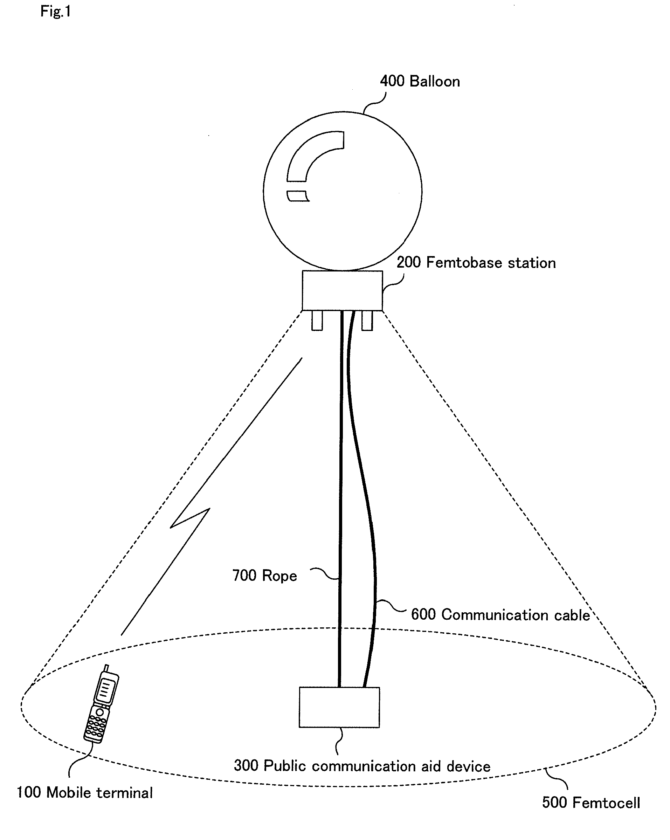

FIG. 1 is a diagram showing the first exemplary embodiment of a communication system of the present invention.

This configuration is formed of mobile terminal 100, femtobase station 200 and public aid communication device 300, as shown in FIG. 1.

Mobile terminal 100 is a typically used radio communication device which the user can carry while moving. Further, when having received a signal that requests mobile terminal ID information from femtobase station 200, mobile terminal 100 transmits the mobile terminal ID information to femtobase station 200. Herein, the mobile terminal ID information is information that has been allotted beforehand to mobile terminal 100 so that the mobile terminal 100 can be identified. The mobile terminal ID information may be IMEI (International Mobile Equipment Identity), serial number, telephone number or SIM (Subscriber Identity module)-ID (Identification), as long as it can identify mobile terminal 100.

Femtobase station 200 is a first communication device that is attached to balloon 400 which is a floating body and deployed at a predetermined height. Further, femtobase station 200 forms femtocell 500 as an area where femtobase station 200 can permit radio communication. It should be noted that another radio base station may be used as femtobase station 200. Further, this balloon 400 is an air balloon which is filled with a gas that is lighter than the ambient air, and is fixed by a rope 700 so that the balloon can be kept floating at a predetermined height (e.g., about 40 m to 60 m) above the ground. Though it is preferable that this height be as high as possible, it is necessary to specify the height within the range of other laws and regulations. Further, when balloon 400 has a diameter of about 2 m and is filled with helium gas, it is possible to fill the balloon with helium gas in a few minutes and make the balloon float in about 12 hours. Moreover, since helium gas is a nonflammable gas, it is safe.

The size (radius) of femtocell 500 can be varied by adjusting the angle of radiation and the power of the radio signal emitted from femtobase station 200.

Further, femtobase station 200 is connected to public communication aid device 300 via communication cable 600 (e.g., Ethernet (registered trade name) cable). This communication cable 600 is a cable that can supply electric power from public aid communication device 300 to femtobase station 200.

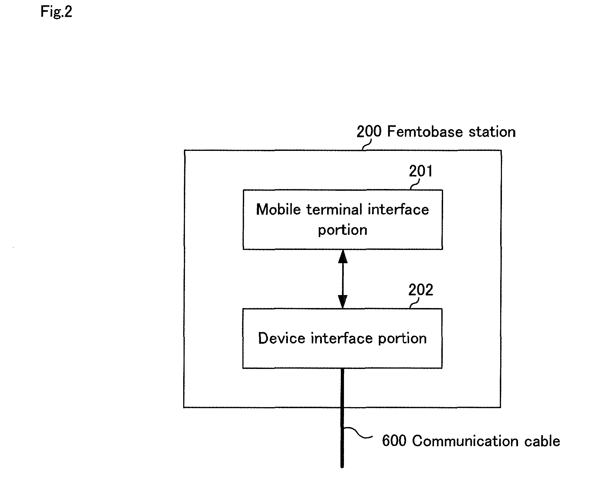

FIG. 2 is a block diagram showing one example of the internal configuration of femtobase station 200 shown in FIG. 1.

Femtobase station 200 shown in FIG. 1 includes mobile terminal interface portion 201 and device interface portion 202, as shown in FIG. 2.

Mobile terminal interface portion 201 transmits radio signals to and receives radio signals from mobile terminal 100 that is present in femtocell 500. Mobile terminal interface portion 201 also transmits a signal, requesting mobile terminal ID information, to femtocell 500.

Device interface portion 202 transmits signals to and receives signals from public aid communication device 300 via communication cable 600. When receiving mobile terminal ID information from mobile terminal 100, device interface portion 202 transmits the mobile terminal ID information to public aid communication device 300.

Public aid communication device 300 is the second communication device deployed on the ground. Public aid communication device 300 is connected to femtobase station 200 via communication cable 600. Herein, the power source to public aid communication device 300 may use an external power supply, independent power generator, storage battery, solar battery, or the like. As long as public aid communication device 300 has the functions described as follows, the device may be used for any purpose.

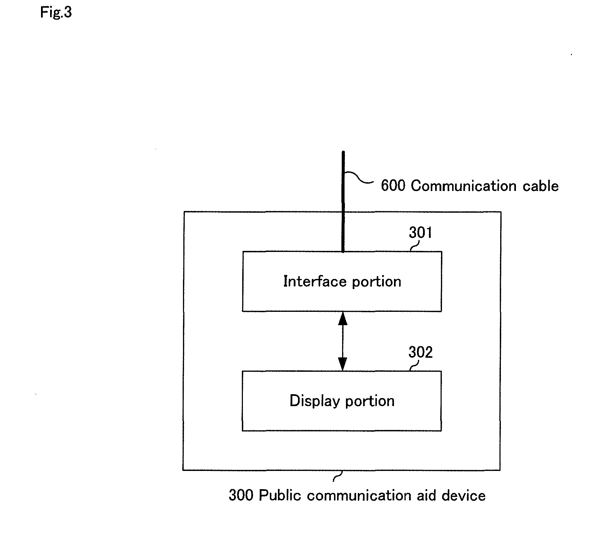

FIG. 3 is a diagram showing one example of the internal configuration of public aid communication device 300 shown in FIG. 1.

As shown in FIG. 3, public aid communication device 300 shown in FIG. 1 includes interface portion 301 and display portion 302.

Interface portion 301 transmits signals to and receives signals from femtobase station 200 via communication cable 600. When mobile terminal ID information is transmitted from femtobase station 200, interface portion 301 receives the mobile terminal ID information.

Display portion 302 displays the mobile terminal ID information received by interface portion 301.

Next, the communication method in the configuration shown in FIG. 1 will be described.

To begin with, in the communication method in the configuration shown in FIG. 1, a process to be implemented when public aid communication device 300 displays mobile terminal ID information will be described.

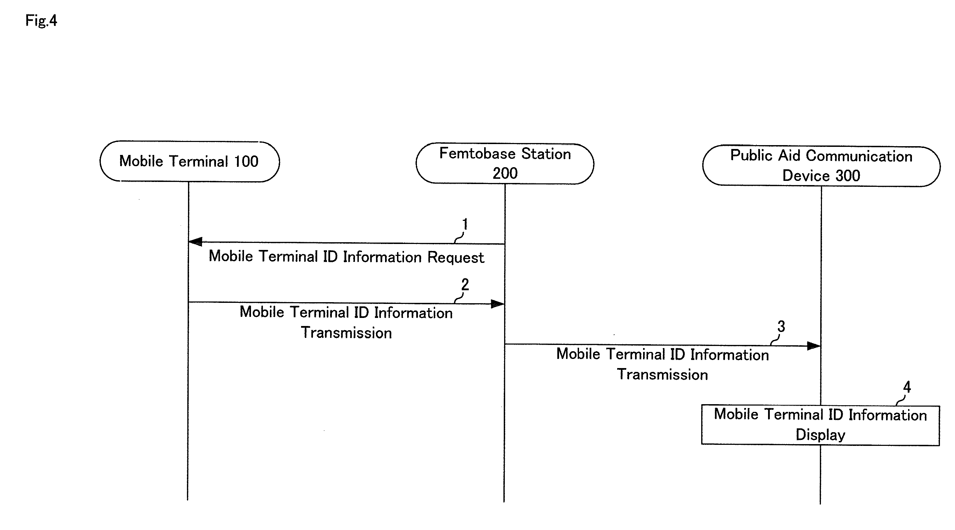

FIG. 4 is a sequence diagram for illustrating the process by which public aid communication device 300 displays mobile terminal ID information, in the commutation method in the configuration shown in FIG. 1.

First, as femtobase station 200 is activated, a radio signal requesting mobile terminal ID information is transmitted from mobile terminal interface portion 201 of femtobase station 200 to femtocell 500, at Step 1.

Then, at Step 2, mobile terminal 100 having received this radio signal transmits mobile terminal ID information. These Steps 1 and 2 are also carried out in the sequence of an ordinary position registering process.

When femtobase station 200 receives the mobile terminal ID information transmitted from mobile terminal 100, the received mobile terminal ID information is transmitted from device interface portion 202 to public aid communication device 300 via communication cable 600, at Step 3.

When interface portion 301 of public aid communication device 300 receives the mobile terminal ID information transmitted from femtobase station 200, the received mobile terminal ID information is displayed on display portion 302 at Step 4.

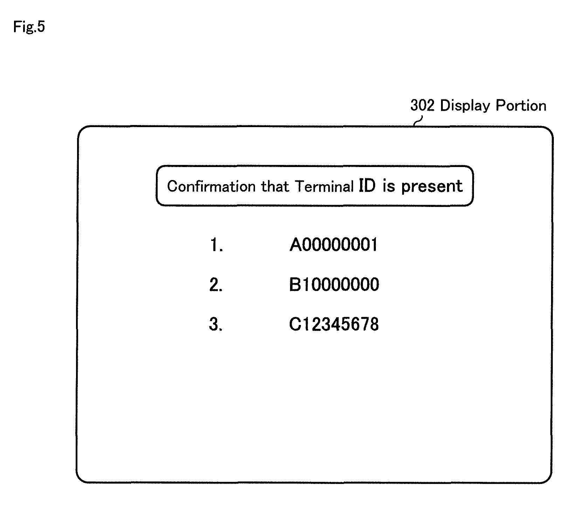

FIG. 5 is a diagram showing one example of mobile terminal ID information displayed on display portion 302 shown in FIG. 3.

As shown in FIG. 5, the received mobile terminal ID information is displayed as the mobile terminal ID information of mobile terminals that are present in femtocell 500, on display portion 302. For example, as shown in FIG. 5, mobile terminal ID information of three mobile terminals ("A00000001", "B10000000" and "C12345678") is displayed on display portion 302, whereby the presence of these three mobile terminals in femtocell 500 can be detected.

Further, when mobile terminal 100 has a function of obtaining positional information that indicates the current position of mobile terminal 100 (e.g., GPS (Global Positioning System) function), mobile terminal 100 may acquire positional information using this function and transmit the acquired positional information together with the mobile terminal ID information to public aid communication device 300 via femtobase station 200. In this case, public aid communication device 300 receives the positional information of mobile terminal 100 and displays the position information on display portion 302, so that the current position of mobile terminal 100 can be known at public aid communication device 300.

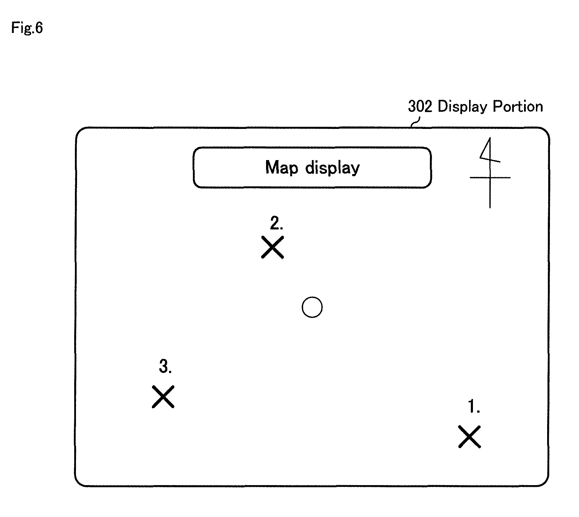

FIG. 6 is a diagram showing one display example in display portion 302 shown in FIG. 3, on which a map showing positions of mobile terminals is displayed.

As shown in FIG. 6, the positions of the mobile terminals numbered 1 to 3 in FIG. 5, whose presence has been confirmed, are indicated on the map. This display makes it possible to recognize where each mobile terminal, whose presence has been confirmed, is located and promptly go to rescue the person who carries the mobile terminal.

Next, in the communication method in the configuration shown in FIG. 1, a process carried out when mobile terminal 100 has made a call will be described.

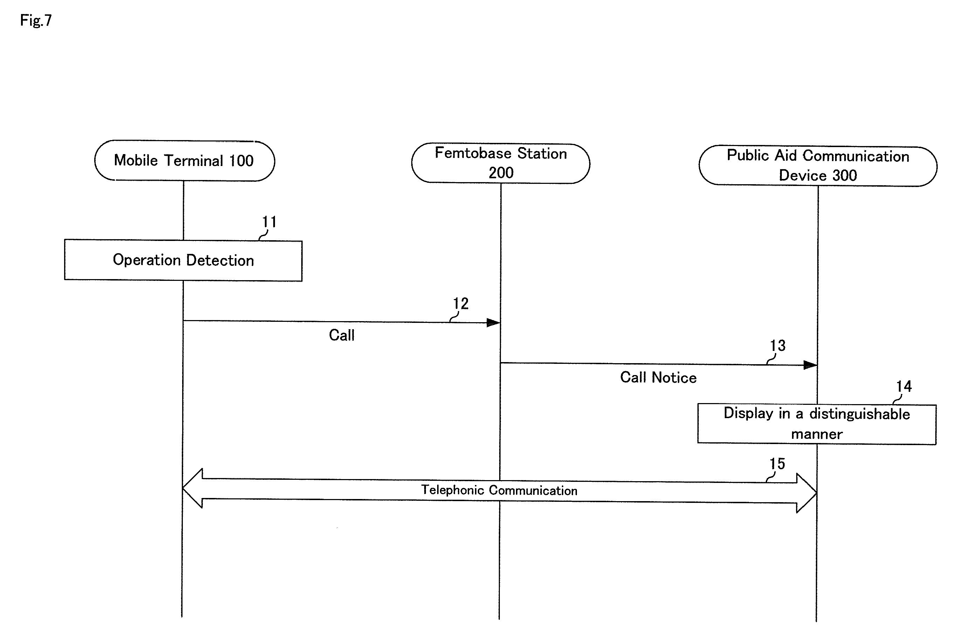

FIG. 7 is a sequence diagram for illustrating a process carried out when mobile terminal 100 has made a call, in the commutation method in the configuration shown in FIG. 1.

When mobile terminal 100 detects a predetermined operation at Step 11, mobile terminal 100 makes a call at Step 12.

Herein, a predetermined operation may be any action such that, for instance, the user holding mobile terminal 100 shakes mobile terminal 100, unfolds folding type mobile terminal 100, touches the display of mobile terminal 100, taps mobile terminal 100 a predetermined number of times, grips mobile terminal 100, presses down any one of multiple button keys of mobile terminal 100, as long as the action can be detected by the sensors or button keys provided for mobile terminal 100.

When the call from mobile terminal 100 is detected by mobile terminal interface portion 201 of femtobase station 200, a notice indicating that a call has been made is given from device interface portion 202 of femtobase station 200 to public aid communication device 300 via communication cable 600 at Step 13.

When the notice indicating that a call has been made is received at interface portion 301 of public aid communication device 300, at Step 14 the mobile terminal ID information of the mobile terminal that has made the call is displayed on display portion 302 in a distinguishable manner, from among the mobile terminal ID information being displayed on display portion 302.

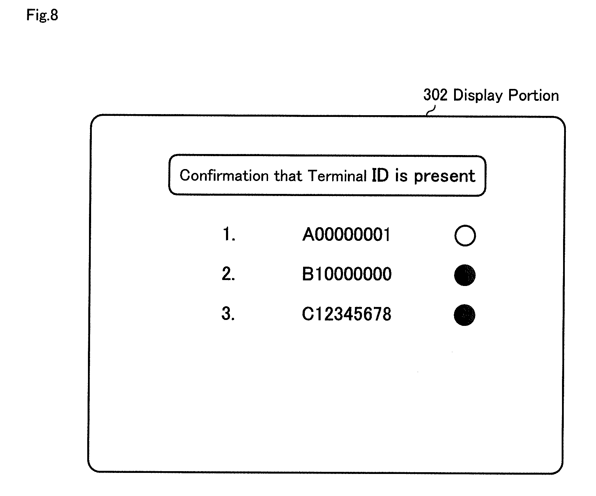

FIG. 8 is a diagram showing one display example in display portion 302 shown in FIG. 3, on which the mobile terminal ID information of a mobile terminal that has made a call is displayed in a distinguishable manner.

As shown in FIG. 8, from among the mobile terminals whose presence has been confirmed, the mobile terminal ID information of the mobile terminal a call has been made is displayed on display portion 302 in a distinguishable manner. The distinguishable indication may be displayed by lighting up and lighting out the mark corresponding to the mobile terminal ID information or making the display color different from that of other mobile terminal ID information, or flashing the mobile terminal ID information itself. That is, the indication may be any form as long as the operator of public aid communication device 300 can recognize it.

Then, at Step 15, telephonic communication is established between public aid communication device 300 and the mobile terminal 100 that has made a call.

Here, if a normal procedure of making a call (e.g., calling by inputting the telephone number of a friend) has been defined as the aforementioned "predetermined operation", mobile terminal 100 can be connected to public aid communication device 300 wherever the person who carries mobile terminal 100 makes a call. Thus, it is possible to perform a prompt rescue operation.

It is possible to provide such a configuration in which when a message such as an email is transmitted from mobile terminal 100, the message is forwarded from femtobase station 200 to public aid communication device 300 so that the message is displayed on display portion 302.

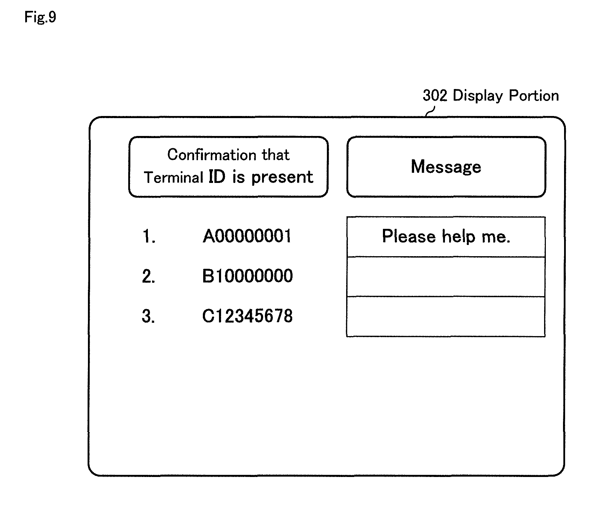

FIG. 9 is a diagram showing one display example when a message transmitted from mobile terminal 100 is displayed on display portion 302.

As shown in FIG. 9, from among the mobile terminals whose presence has been confirmed, a message is displayed on display portion 302 in association with the mobile terminal ID information of the mobile terminal from which the message has been transmitted.

Next, in the communication method in the configuration shown in FIG. 1, the process carried out when public aid communication device 300 makes a call to a mobile terminal of the mobile terminal ID information displayed on display portion 302 will be described.

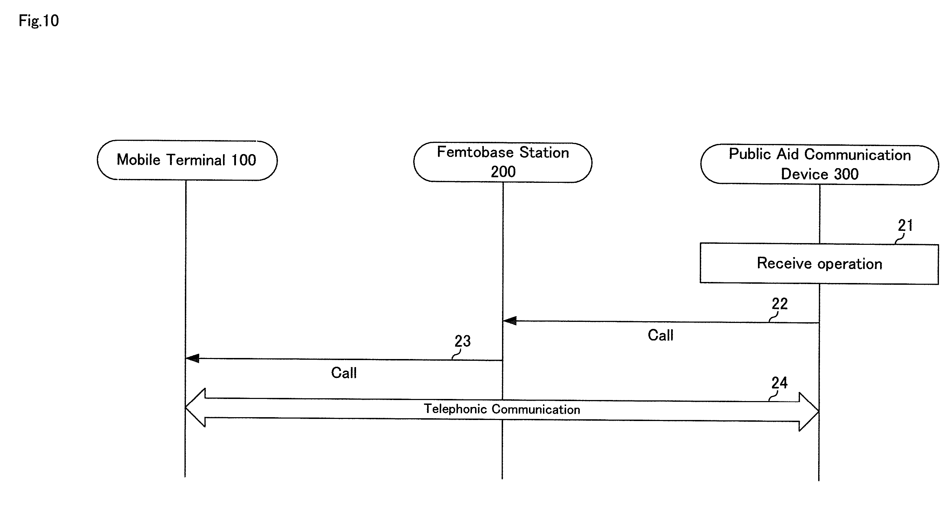

FIG. 10 is a sequence diagram for illustrating a process carried out when public aid communication device 300 makes a call to a mobile terminal that has the mobile terminal ID information displayed on display portion 302, in the commutation method in the configuration shown in FIG. 1.

In a state where mobile terminal ID information whose presence has been confirmed is displayed on display portion 302, when public aid communication device 300 receives a predetermined operation that designates mobile terminal ID information at Step 21, public aid communication device 300 makes a call to the designated mobile terminal at Step 22.

Herein, designation by a predetermined operation may be performed by touching one items of ID information from among a plurality of mobile terminal ID information items being displayed with a finger or the like to make a designation when, for example, display portion 302 has a touch panel function, or by moving a cursor or the like to make a choice. That is, designation by a predetermined operation is possible as long as public aid communication device 300 can recognize the ID information on one selected mobile terminal.

Then, at Step 23, femtobase station 200 makes a call to mobile terminal 100 designated by public aid communication device 300. At Step 24, telephonic communication is established between public aid communication device 300 and mobile terminal 100 by way of femtobase station 200.

This telephonic communication is a so-called intra-call like a communication using transceivers, which can be established in a closed area inside femtocell 500 without using an external network. As a result, even if external networks and external communication devices have broken down, this configuration makes it possible to establish communication within the area.

Other than public aid communication device 300, the device that enables communication with mobile terminal 100 may include a rescue terminal.

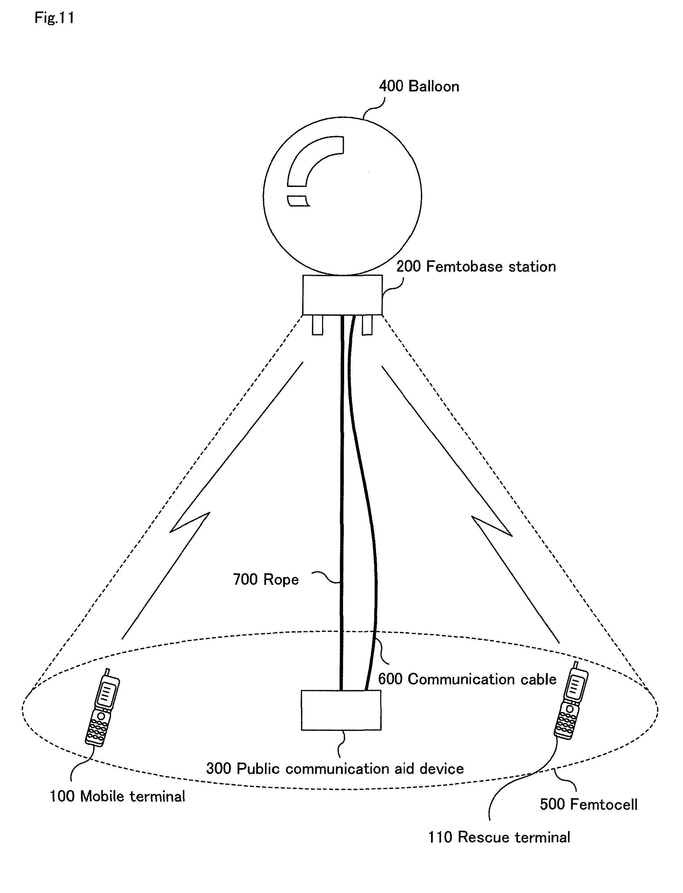

FIG. 11 is a diagram showing one example of the configuration shown in FIG. 1, in which a rescue terminal is provided.

As shown in FIG. 11, in this configuration rescue terminal 110 is added to the configuration shown in FIG. 1.

Rescue terminal 110 is a mobile communication device that can perform radio communication with femtobase station 200.

In this configuration, when the mobile terminal ID information displayed on display portion 302 is selected by a predetermined operation, public aid communication device 300 makes a call to the mobile terminal that has transmitted the selected mobile terminal ID information, to thereby relay telephonic communication between rescue terminal 110 and mobile terminal 100 by way of femtobase station 200.

Next, the communication method in the configuration shown in FIG. 11 will be described.

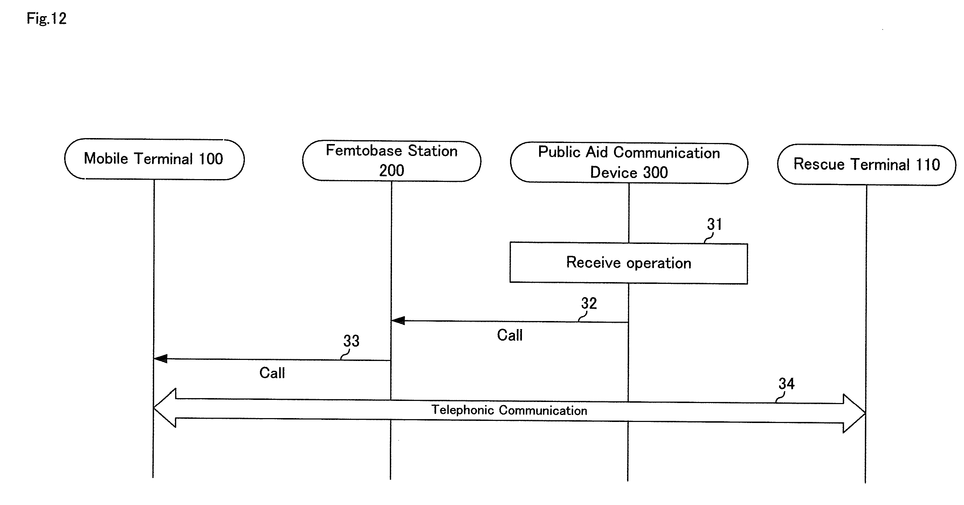

Fig. 12 is a sequence diagram for illustrating a communication method in the configuration shown in FIG. 11.

In a state where mobile terminal ID information for which existence has been confirmed is displayed on display portion 302, when public aid communication device 300 receives a predetermined operation that designates mobile terminal ID information at Step 31, public aid communication device 300 makes a call to the designated mobile terminal at Step 32.

Herein, designation by a predetermined operation may be the same as that described with FIG. 10.

Then, at Step 33, femtobase station 200 makes a call to the mobile terminal 100 designated by public aid communication device 300. At Step 34, public aid communication device 300 relays communication between rescue terminal 110 and mobile terminal 100 by way of femtobase station 200 so as to establish telephonic communication between rescue terminal 110 and mobile terminal 100.

Instead of public aid communication device 300 making a call to mobile terminal 100 to establish telephonic communication as stated above, rescue terminal 110 may make a call to mobile terminal 110 so as to establish telephonic communication between rescue terminal 110 and mobile terminal 100. In this case, when rescue terminal 110 makes a call request to public aid communication device 300, the requested public aid communication device 300 makes a call to mobile terminal 100 for which existence has been confirmed (to an arbitrary terminal or a terminal that has been selected by a touch-panel function or the like if there are some mobile terminals), to thereby establish telephonic communication between rescue terminal 110 and mobile terminal 100. Alternatively, public aid communication device 300 first provides notification that there is a mobile terminal 100 whose presence has been conformed, or notifies the mobile terminal ID information that identifies mobile terminal 100 whose presence has been confirmed, to rescue terminal 110, and when rescue terminal 110, in response to the notification, makes a call request to public aid communication device 300, telephonic communication between rescue terminal 110 and mobile terminal 100 may be established by making a call in accordance with that request.

This telephonic communication is a so-called intra-call like a communication that uses transceivers, which, can be established in a closed area inside femtocell 500 without use of an external network. As a result, similarly to the aforementioned communication between public aid communication device 300 and mobile terminal 100, even if external networks and external communication devices have broken down, this configuration makes it possible to establish communication within the area.

Further, use of such rescue terminal 110 makes it possible for the rescuer to find a disaster victim who cannot move at all by moving around while maintaining connection with the victim.

### (The Second Exemplary Embodiment)

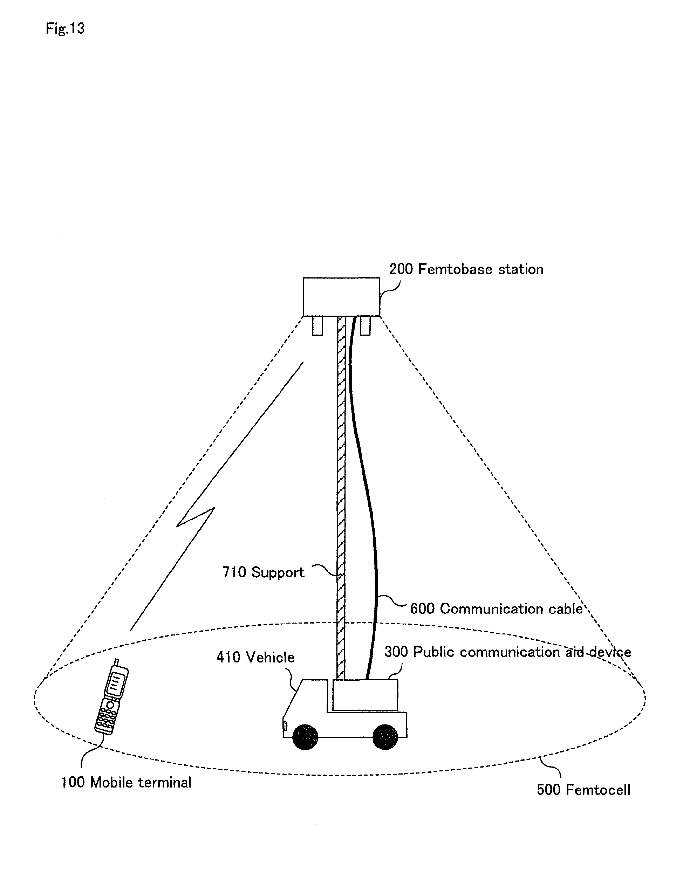

FIG. 13 is a diagram showing the second exemplary embodiment of a communication system of the present invention.

As shown in FIG. 13, this configuration is formed of mobile terminal 100, femtobase station 200 and public aid communication device 300.

Mobile terminal 100 is the same one as that of the first exemplary embodiment.

The internal configuration and functions of femtobase station 200 are the same as those in the first exemplary embodiment. Femtobase station 200 is attached to support 710 mounted on vehicle 410 so as to be positioned at a predetermined height. This may be set at any height as long as vehicle 410 and support 710 will not fall down, but the height needs to be specified conforming to other laws and rules. The structure and material of support 710 are not particularly limited. For example, the material of support 710 may be iron or aluminum. It is preferable that support 710 can be expanded and contracted.

The internal configuration and functions of public aid communication device 300 are the same as those in the first exemplary embodiment. Further, public aid communication device 300 is mounted on vehicle 410. The power source for public aid communication device 300 may be an external power supply, independent power generator, storage battery, solar battery, etc., or may be supplied from the battery of vehicle 410, or the like.

Since the communication method in the configuration shown in FIG. 13 is the same as that in the first exemplary embodiment, description is omitted herein.

### (The Third Exemplary Embodiment)

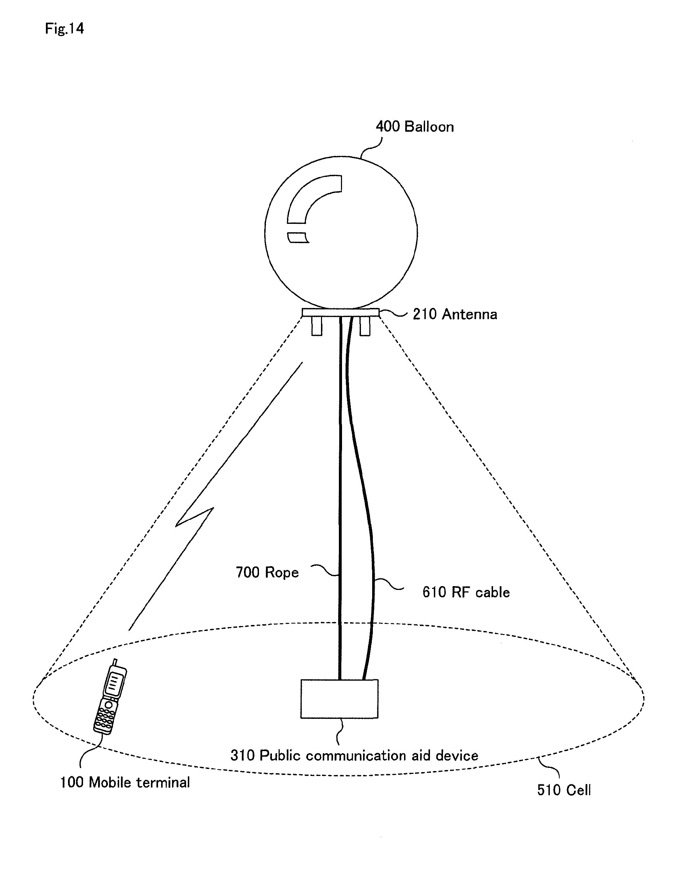

FIG. 14 is a diagram showing the third exemplary embodiment of a communication system of the present invention.

This configuration is formed of mobile terminal 100, antenna 210 and public aid communication device 310, as shown in FIG. 14.

Mobile terminal 100 is a typically used radio communication device which the user can carry while moving. Further, when having received a signal that requests mobile terminal ID information from public aid communication device 310 by way of antenna 210, mobile terminal 100 transmits the mobile terminal ID information to public aid communication device 310 by way of antenna 210. Herein, the mobile terminal ID information is information that has been allotted beforehand to mobile terminal 100 so that the mobile terminal 100 can be identified. The mobile terminal ID information may be, for example, a serial number or SIM-ID.

Antenna 210 performs radio communication with mobile terminal 100 residing in cell 510, which is the radio communication coverage area of antenna 210. Antenna 210 also performs wired communication with public aid communication device 310, using RF (Radio Frequency) cable 610. For this purpose, antenna 210 has a function of conversion between radio signals and cable signals. Antenna 210 is attached to balloon 400 as a floating body, and is deployed at a predetermined height. This balloon 400 is the same one as the one that used in the first embodiment.

The size (radius) of cell 510 is variable by adjusting the angle of radiation and the power of radio signals radiated from antenna 210.

Public aid communication device 310 is a communication device deployed on the ground and connected to antenna 210 via RF cable 610. Herein, the power source to public aid communication device 310 may use an external power supply, independent power generator, storage battery, solar battery, or the like. As long as public aid communication device 310 has the functions described as follows, the device may be used for any purpose.

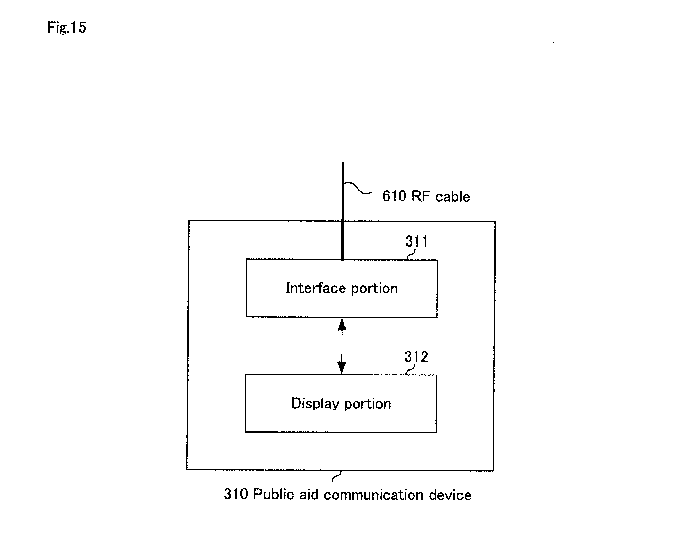

FIG. 15 is a diagram showing one example of the internal configuration of public aid communication device 310 shown in FIG. 14.

As shown in FIG. 15, public aid communication device 310 shown in FIG. 14 includes interface portion 311 and display portion 312.

Interface portion 311 transmits a signal requesting mobile terminal ID information that has been allotted beforehand to the mobile terminal to make the mobile terminal identifiable. Further, when mobile terminal ID information is transmitted from mobile terminal 110 via antenna 210, interface portion 311 receives the mobile terminal ID information.

Display portion 312 displays the mobile terminal ID information received by interface portion 311.

Next, the communication method in the configuration shown in FIG. 14 will be described.

To begin with, in the communication method in the configuration shown in FIG. 14, a process to be implemented when public aid communication device 310 displays mobile terminal ID information will be described.

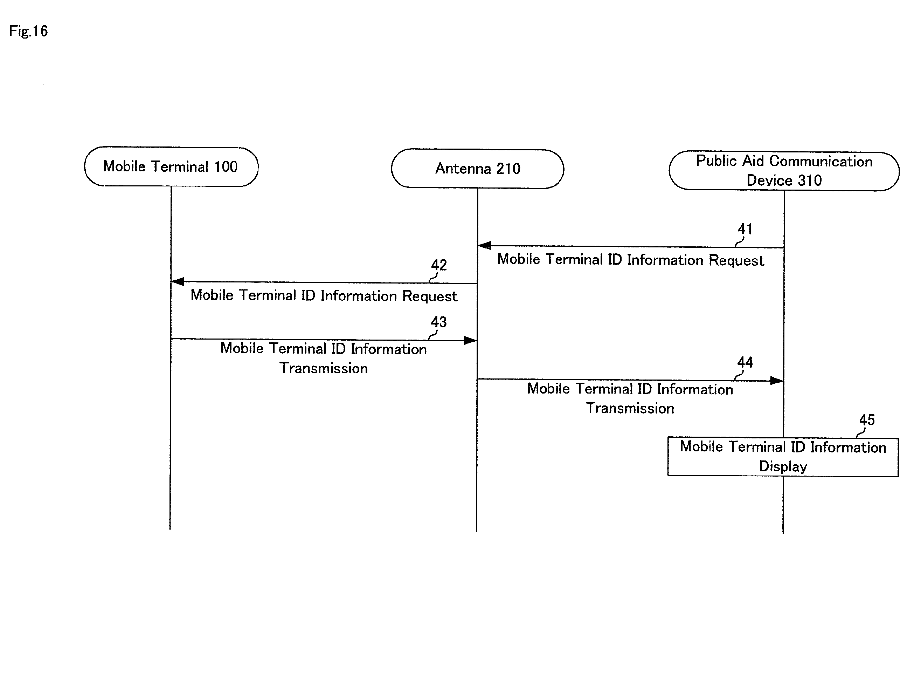

FIG. 16 is a sequence diagram for illustrating the process by which public aid communication device 310 displays mobile terminal ID information, in the commutation method in the configuration shown in FIG. 14.

First, as public aid communication device 310 is activated, a radio signal, that requests mobile terminal ID information, is transmitted from mobile terminal interface portion 311 of public aid communication device 310 to cell 510, via RF cable 610 and antenna 210, at Step 41 and Step 42.

Then, at Step 43, mobile terminal 100 that received this radio signal transmits mobile terminal ID information. These Steps 41 to 43 are also carried out in an ordinary position registering process sequence.

When public aid communication device 310 receives the mobile terminal ID information transmitted from mobile terminal 100 via antenna 210 at interface portion 311 at Step 44, the received mobile terminal ID information is displayed on display portion 312 at Step 45.

The display in display portion 312 may be the same as that illustrated in the first exemplary embodiment.

Further, similarly to the first exemplary embodiment, when mobile terminal 100 has a function for obtaining positional information that indicates the current position of mobile terminal 100 (e.g., GPS function), mobile terminal 100 may acquire positional information using this function and transmit the acquired position information together with the mobile terminal ID information to public aid communication device 310 via antenna 210. In this case, public aid communication device 310 receives the positional information of mobile terminal 100 and displays the position information on display portion 312, so that the current position of mobile terminal 100 can be known at public aid communication device 310. The display of the map or the like based on this positional information may be done in the same manner as in the first exemplary embodiment.

Next, in the communication method in the configuration shown in FIG. 14, a process carried out when mobile terminal 100 has made a call will be described.

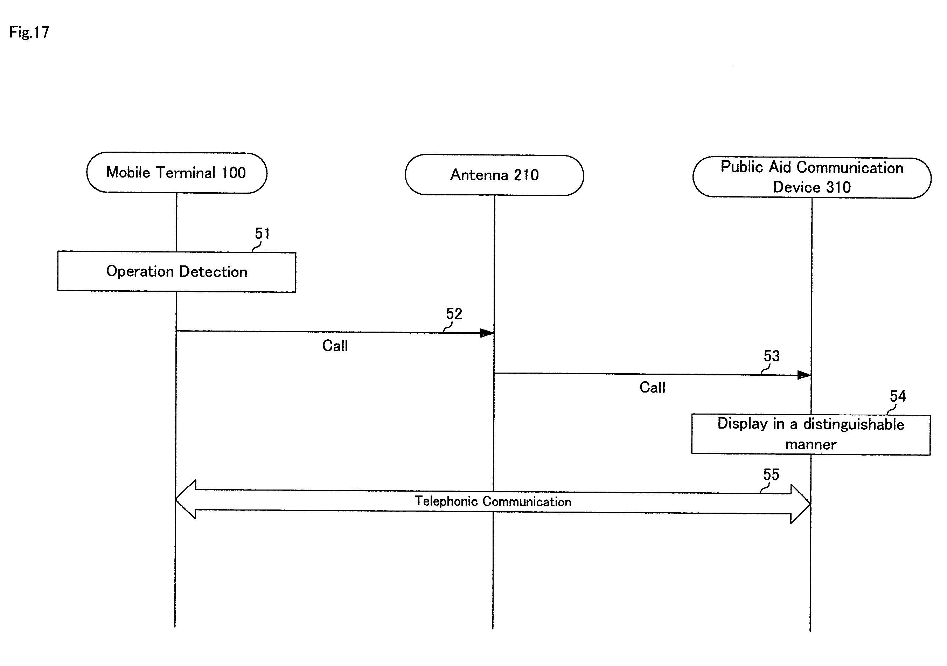

FIG. 17 is a sequence diagram for illustrating a process carried out when mobile terminal 100 has made a call, in the commutation method in the configuration shown in FIG. 14.

When mobile terminal 100 detects a predetermined operation at Step 51, mobile terminal 100 makes a call at Step 52.

This predetermined operation is the same as that described in the first exemplary embodiment.

When a call from mobile terminal 100 has been detected at interface portion 311 by way of antenna 210 and RF cable 610 at Step 53, the mobile terminal ID information of the mobile terminal that has made a call is displayed on display portion 312 in a distinguishable manner, from among the mobile terminal ID information being displayed on display portion 312, at Step 54.

The display in display portion 312 may be the same as that illustrated in the first exemplary embodiment.

Then, at Step 55, telephonic communication is established between public aid communication device 310 and the mobile terminal 100 that has made a call.

Here, if the normal procedures for making a call (e.g., calling by inputting the telephone number of a friend) has been defined as the aforementioned "predetermined operation", mobile terminal 100 can be connected to public aid communication device 310 from wherever the person who carries mobile terminal 100 makes the call. Thus, it is possible to perform a prompt rescue operation.

When a message such as an email is transmitted from mobile terminal 100, the message may be forwarded via antenna 210 and RF cable 610 to public aid communication device 310 so that the message can be displayed on display portion 312.

The display of the message in display portion 312 may be the same as that illustrated in the first exemplary embodiment.

Next, in the communication method in the configuration shown in FIG. 1, the process carried out when public aid communication device 310 makes a call to a mobile terminal that has the mobile terminal ID information displayed on display portion 312 will be described.

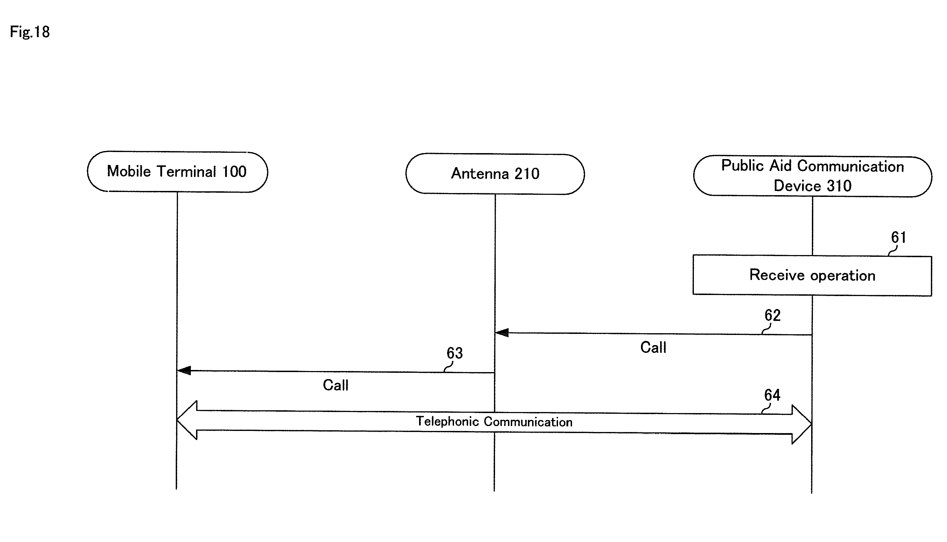

FIG. 18 is a sequence diagram for illustrating the process that is carried out when public aid communication device 310 makes a call to a mobile terminal that has the mobile terminal ID information displayed on display portion 312, in the commutation method in the configuration shown in FIG. 1.

In a state where mobile terminal ID information whose presence has been confirmed is displayed on display portion 312, when public aid communication device 310 receives a predetermined operation that designates mobile terminal ID information at Step 61, public aid communication device 310 makes a call to the designated mobile terminal via antenna 210 at Steps 62 and 63.

Here, designation by a predetermined operation is the same as in the first exemplary embodiment.

Then, at Step 64, telephonic communication is established between public aid communication device 310 and mobile terminal 100 by way of antenna 210.

The telephonic communication is a so-called intra-call like communication using transceivers, which can be established in a closed area inside cell 510 without using an external network. As a result, even if external networks and external communication devices have broken down, this configuration makes it possible to establish communication within the area.

Other than public aid communication device 310, the device that enables communication with mobile terminal 100 may include a rescue terminal.

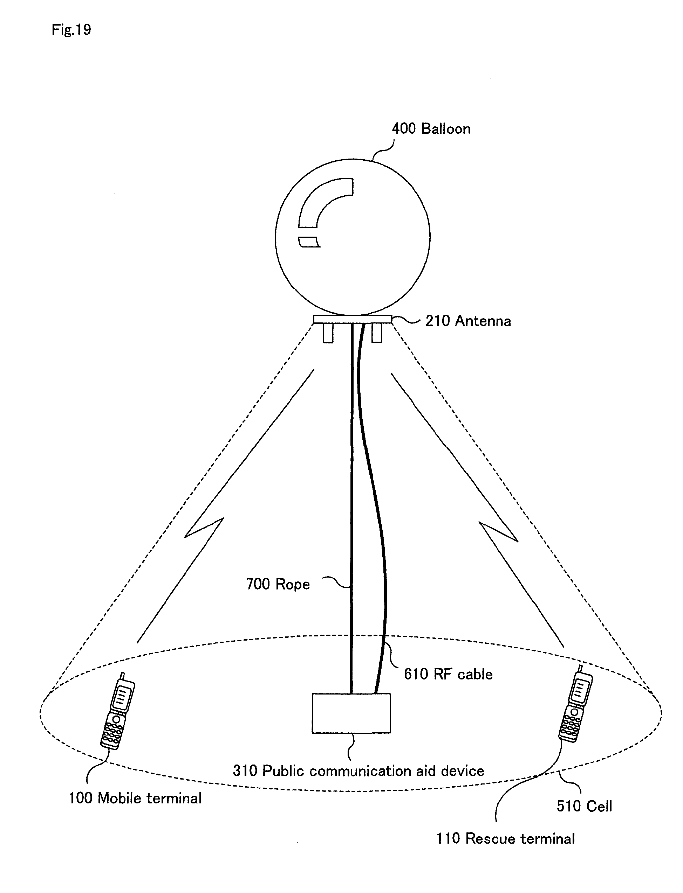

FIG. 19 is a diagram showing one example of the configuration shown in FIG. 14, in which a rescue terminal is provided.

As shown in FIG. 19, in this configuration rescue terminal 110 is added to the configuration shown in FIG. 14.

Rescue terminal 110 is a mobile communication device that can perform radio communication with antenna 210.

In this configuration, when the mobile terminal ID information displayed on display portion 312 is selected by a predetermined operation, public aid communication device 310 makes a call to the mobile terminal that has transmitted the selected mobile terminal ID information, to thereby relay telephonic communication between rescue terminal 110 and the mobile terminal by way of antenna 210.

Next, the communication method in the configuration shown in FIG. 19 will be described.

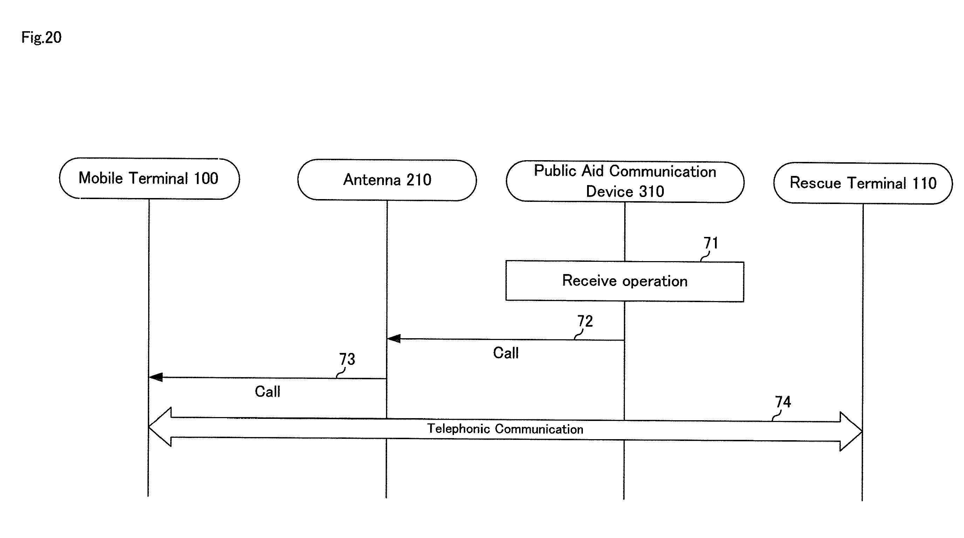

FIG. 20 is a sequence diagram for illustrating a communication method in the configuration shown in FIG. 19.

In a state where mobile terminal ID information whose presence has been confirmed is displayed on display portion 312, when public aid communication device 310 receives a predetermined operation that designates mobile terminal ID information at Step 71, public aid communication device 310 makes a call to the designated mobile terminal by way of antenna 210 at Step 72 and Step 73.

Herein, designation by a predetermined operation may be the same as described in the first exemplary embodiment.

Then, at Step 74, public aid communication device 310 relays the call between rescue terminal 110 and mobile terminal 100 by way of antenna 210 so that telephonic communication between rescue terminal 110 and mobile terminal 100 is established.

Similarly to that described in the first exemplary embodiment, rescue terminal 110 may make a call to mobile terminal 100 so as to establish telephonic communication between rescue terminal 110 and mobile terminal 100. In this case, when rescue terminal 110 makes a call request to public aid communication device 310, the requested public aid communication device 310 makes a call to mobile terminal 100 whose presence has been confirmed (to an arbitrary terminal or a terminal that has been selected by a touch-panel function or the like if there are some terminals), to thereby establish telephonic communication between rescue terminal 110 and mobile terminal 100. Alternatively, public aid communication device 310 first provides notification that there is a mobile terminal 100 whose presence has been conformed, or notifies the mobile terminal ID information of mobile terminal 100 whose presence has been confirmed, to rescue terminal 110, and when rescue terminal 110 replies to the notification and makes a call request to public aid communication device 310, telephonic communication between rescue terminal 110 and mobile terminal 100 may be established by making a call in accordance with that request.

This telephonic communication is a so-called intra-call like communication that uses transceivers, which can be established in a closed area inside cell 510 without use of an external network. As a result, similarly to the aforementioned communication between public aid communication device 310 and mobile terminal 100, even if external networks and external communication devices have broken down, this configuration makes it possible to establish communication within the area.

Further, use of such rescue terminal 110 makes it possible for the rescuer to find a disaster victim who cannot move at all by moving around whilst maintaining connection with the victim.

(The Fourth Exemplary Embodiment)

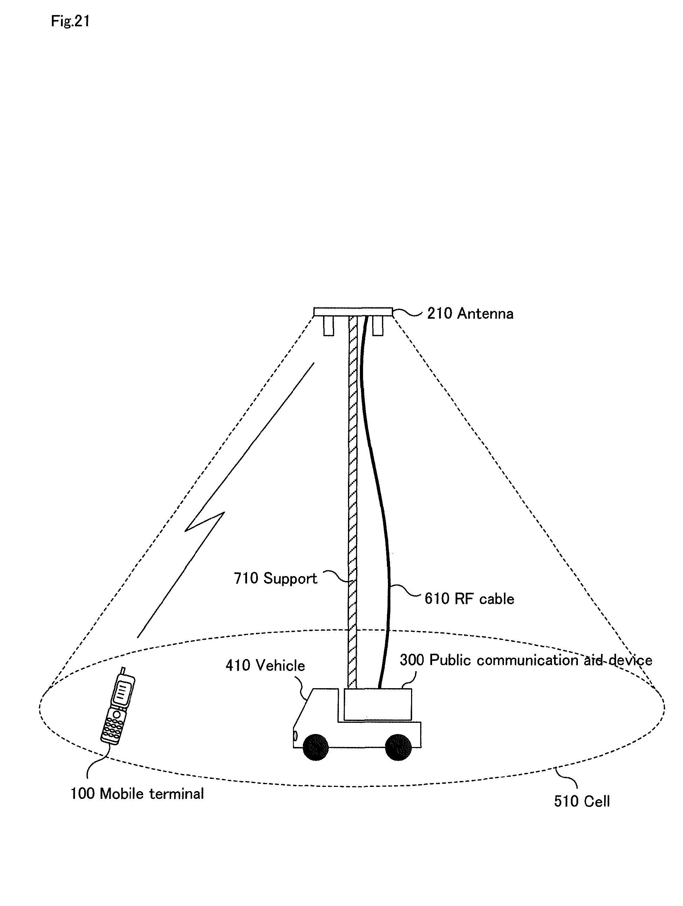

FIG. 21 is a diagram showing the fourth exemplary embodiment of a communication system of the present invention.

As shown in FIG. 21, this embodiment is formed of mobile terminal 100, antenna 210 and public aid communication device 310.

Mobile terminal 100 is the same one as that of the first exemplary embodiment.

The function of antenna 210 is the same one as that in the third exemplary embodiment. Antenna 210 is attached to support 710 mounted on vehicle 410 so as to be positioned at a predetermined height. This may be set at any height as long as vehicle 410 and support 710 will not fall down, but the height needs to be specified conforming to other laws and rules. The structure and material of support 710 are not particularly limited. For example, the material of support 710 may be iron or aluminum. It is preferable that support 710 can be expanded and contracted.

The internal configuration and functions of public aid communication device 310 are the same as those in the third exemplary embodiment. Further, public aid communication device 310 is mounted on vehicle 410. The power source to public aid communication device 310 may use an external power supply, independent power generator, storage battery, solar battery, etc., or may be supplied from the battery of vehicle 410, or the like.

Since the communication method in the configuration shown in FIG. 21 is the same as that in the third exemplary embodiment, description is omitted herein.

Next, the actual way of using the communication system of the present invention will be described.

First, one use case of the present invention in the first and third exemplary embodiments using the above-described balloon will be described.

When communication using mobile terminals has failed because of the collapse of external networks and communication devices, or because of the imposition of communication restrictions due to an earthquake disaster, a balloon with a base station or an antenna attached thereto is charged with gas. This gas charge is complete within some minutes.

Thereafter, the balloon full of gas is floated to a predetermined height and a public aid communication device (femtobase station) is activated, communication between the public aid communication device (femtobase station) and mobile terminals is implemented. Further, when a rescue terminal exists, communication between the mobile terminal and the rescue terminal is implemented. These communications do not need to connect to an external network, but are established in a closed area inside the cell.

Accordingly, once these are activated, even if the mobile terminal that the disaster victim possesses fails to communicate with external networks or with communication device, the disaster victim can effectively use the mobile terminal as a rescue means for themselves. Further, when a disaster victim who is unable to move because of being trapped under a destroyed house sees the balloon that rises to a predetermined height, the disaster victim can recognize that rescue is close and can try to operate the mobile terminal, which will contribute to making possible a quick rescue.

Next, a use case of the present invention in the second and fourth exemplary embodiments using the above-described vehicle will be described.

When communication using mobile terminals has failed because of the collapse of external networks and communication devices, or because of the imposition of communication restriction due to an earthquake disaster, a vehicle with a base station or antenna and a public aid communication device mounted thereon is deployed to the desired location. Then, after the vehicle is fixed at a predetermined position, the support column with the base station or antenna attached to the front end thereof is extended to a predetermined height. Then, a public aid communication device (femtobase station) is activated, communication between the public aid communication device (femtobase station) and mobile terminals is implemented. Further, when a rescue terminal exists, communication between the mobile terminal and the rescue terminal is implemented. These communications do not need to connect to an external network, but are established in a closed area inside the cell.

Accordingly, once these are activated, even if the mobile terminal that the disaster victim possesses fails to communicate with external networks or communication device, the disaster victim can effectively use the mobile terminal as a rescue means for themselves. Further, when a conspicious symbol (e.g., flag, light and the like) is added to the base station or antenna at the top of the support, a disaster victim who is unable to move because of being trapped under the destroyed house sees the symbol, can recognize that rescue is close and can try to operate the mobile terminal, which will contribute to making possible a quick rescue.

As described above, even in case mobile terminals cannot perform normal communication, use of the present invention enables communication within a predetermined area and it is possible to effectively use mobile terminals as a means for rescuing disaster victims by use of the communications.

Although the present invention has been explained with reference to the exemplary embodiment, the present invention should not be limited to the above exemplary embodiment. Various modifications that can be understood by those skilled in the art may be made to the structures and details of the present invention within the scope of the present invention.

This application claims priority based on Japanese Patent Application No. 2011-160042, filed on July 21, 2011, and incorporates all the disclosure thereof herein.

## Claims

1. A communication system including a mobile terminal, a first communication device and a second communication device, **characterized in that**
the mobile terminal, when receiving a signal transmitted from the first communication device for requesting mobile terminal ID information that has been allotted beforehand to the mobile terminal so that the mobile terminal can be identified, transmits the mobile terminal ID information to the first communication device,
the first communication device is deployed at a position of a predetermined height, the first communication device transmits a signal, requesting the mobile terminal ID information, to the radio communication coverage area and transmits the mobile terminal ID information transmitted from the mobile terminal to the second communication device, and
the second communication device displays the mobile terminal ID information transmitted from the first communication device.

2. The communication system according to Claim 1, wherein the first communication device is attached to a floating body and deployed at a position of the height.

3. The communication system according to Claim 2, wherein the first communication device is attached to the floating body, which is a balloon filled with a gas lighter than ambient air.

4. The communication system according to Claim 1, wherein the first communication device is attached to a support and deployed at a position of the height.

5. The communication system according to Claim 4, wherein the first communication device is attached to the support that is mounted on a vehicle and deployed at a position of the height, and,
the second communication device is mounted on the vehicle.

6. The communication system according to Claim 1, wherein the mobile terminal acquires positional information indicating the position of the mobile terminal and transmits the acquired positional information together with the mobile terminal ID information,
the first communication device transmits the positional information transmitted from the mobile terminal, together with the mobile terminal ID information, and
the second communication device displays a map based on the positional information transmitted from the first communication device.

7. The communication system according to Claim 1, wherein the first communication device, when receiving a call from the mobile terminal, notifies the second communication device of the fact of reception, and
the second communication device, when receiving the call notification from the first communication device, displays the mobile terminal ID information allotted to the mobile terminal that made the call, in a distinguishable manner.

8. The communication system according to Claim 7, wherein the second communication device, when receiving the notice of reception of the call, from the first communication device, establishes telephonic communication with the mobile terminal that has made the call, by way of the first communication device.

9. The communication system according to Claim 7 or 8, wherein the mobile terminal makes a call when it has detected that the user has made a predetermined operation.

10. The communication system according to Claim 1, wherein the first communication device, when receiving transmission of a message from the mobile terminal, transmits the message to the second communication device, and
the second communication device displays the message transmitted from the first communication device.

11. The communication system according to Claim 1, wherein the second communication device, when the displayed mobile terminal ID information is selected by a predetermined operation, makes a call to the mobile terminal that sent the selected mobile terminal ID information, and,
the first communication device, when the second communication device has made a call to the mobile terminal, relays telephonic communication between the second communication device and the mobile terminal.

12. The communication system according to Claim 1, further including a movable rescue terminal capable of performing radio communication with the first communication device, wherein the second communication device, when the displayed mobile terminal ID information is selected by a predetermined operation, makes a call to the mobile terminal that sent the selected mobile terminal ID information, and relays telephonic communication between the rescue terminal and mobile terminal by way of the first communication device.

13. The communication system according to Claim 1, wherein the first communication device and the second communication device are connected by a communication cable that can supply electric power from the second communication device to the first communication device.

14. A communication system including a mobile terminal, an antenna and a communication device, **characterized in that**
the mobile terminal, when receiving a signal, transmitted from the communication device by way of the antenna, for requesting mobile terminal ID information that has been allotted beforehand to the mobile terminal so that the mobile terminal can be identified, transmits the mobile terminal ID information to the communication device by way of the antenna,
the antenna is deployed at a position of a predetermined height,
the communication device transmits a signal, requesting the mobile terminal ID information, to the radio communication coverage area of the antenna by way of the antenna and displays the mobile terminal ID information transmitted from the mobile terminal by way the antenna.

15. The communication system according to Claim 14, wherein the antenna is attached to a floating body and deployed at a position of the height.

16. The communication system according to Claim 15, wherein the antenna is attached to the floating body, which is a balloon filled with a gas lighter than ambient air.

17. The communication system according to Claim 14, wherein the antenna is attached to a support and deployed at a position of the height.

18. The communication system according to Claim 17, wherein the antenna is attached to the support that is mounted on a vehicle and deployed at a position of the height, and,
the communication device is mounted on the vehicle.

19. The communication system according to Claim 14, wherein the mobile terminal acquires positional information indicating the position of the mobile terminal and transmits the acquired positional information together with the mobile terminal ID information, and,
the communication device displays a map based on the positional information transmitted from the mobile terminal.

20. The communication system according to Claim 14, wherein the communication device, when receiving a call from the mobile terminal, displays the mobile terminal ID information allotted to the mobile terminal that made the call, in a distinguishable manner.

21. The communication system according to Claim 20, wherein the communication device, when receiving a call from the mobile terminal, establishes telephonic communication with the mobile terminal that has made the call, by way of the antenna.

22. The communication system according to Claim 20 or 21, wherein the mobile terminal makes a call when it has detected that the user has made a predetermined operation.

23. The communication system according to Claim 14, wherein the communication device, when receiving a message transmission from the mobile terminal by way of the antenna, displays the message.

24. The communication system according to Claim 14, wherein the communication device, when the displayed mobile terminal ID information is selected by a predetermined operation, makes a call by way of the antenna to the mobile terminal that sent the selected mobile terminal ID information, and establishes telephonic communication between the mobile terminal and itself by way of the antenna.

25. The communication system according to Claim 14, further including a movable rescue terminal capable of performing radio communication with the antenna, wherein the communication device, when the displayed mobile terminal ID information is selected by a predetermined operation, makes a call to the mobile terminal that sent the selected mobile terminal ID information, and relays telephonic communication between the rescue terminal and mobile terminal by way of the antenna.

26. The communication system according to Claim 14, wherein the antenna and the communication device are connected by an RF cable.

27. A communication device deployed at a position of a predetermined height, comprising:
a mobile terminal interface portion that transmits a signal, requesting mobile terminal ID information that has been allotted beforehand to a mobile terminal so that the mobile terminal can be identified, to the radio communication coverage area of the communication device, and
a device interface portion that, when the mobile terminal ID information is transmitted from the mobile terminal, transmits the mobile terminal ID information to a device connected to the communication device.

28. A communication device comprising:
an interface portion that, when mobile terminal ID information that has been allotted beforehand to a mobile terminal existing in the radio communication coverage area of a device connected thereto is transmitted from the device, receives the mobile terminal ID information; and,
a display portion that displays the mobile terminal ID information which the interface portion has received.

29. A communication device connected to an antenna, comprising:
an interface portion that transmits a signal, requesting mobile terminal ID information which has been allotted beforehand to a mobile terminal so that the mobile terminal can be identified, to the radio communication coverage area of the antenna and that, when the mobile terminal ID information is transmitted from the mobile terminal by way of the antenna, receives the mobile terminal ID information; and,
a display portion that displays the mobile terminal ID information which the interface portion has received.

30. A communication method in a communication system including a mobile terminal, a first communication device and a second communication device, comprising:
a step for the first communication device deployed at a position of a predetermined height to transmit a signal, requesting mobile terminal ID information that has been allotted beforehand to the mobile terminal so that the mobile terminal can be identified, to the radio communication coverage area of the first communication device;
a step for the mobile terminal to transmit the mobile terminal ID information to the first communication device when the mobile terminal receives the signal requesting the mobile terminal ID information that was transmitted from the first communication device;
a step for the first communication device to transmit the mobile terminal ID information transmitted from the mobile terminal to the second communication device; and,
a step for the second communication device to display the mobile terminal ID information transmitted from the first communication device.

31. A communication method in a communication system including a mobile terminal and a communication device, comprising:
a step for the communication device to transmit a signal, requesting mobile terminal ID information that has been allotted beforehand to the mobile terminal so that the mobile terminal can be identified, to the radio communication coverage area of an antenna connected to the communication device and deployed at a position of a predetermined height, by way of the antenna;
a step for the mobile terminal to transmit the mobile terminal ID information to the communication device by way of the antenna when the mobile terminal receives the signal requesting the mobile terminal ID information that was transmitted from the communication device by way of the antenna; and,
a step for the communication device to display the mobile terminal ID information transmitted from the mobile terminal by way of the antenna.
